# EUROPEAN PATENT SPECIFICATION

(11) **EP 1 283 156 B1**
(45) Date of publication and mention of the grant of the patent: **10.03.2010**
(21) Application number: 02017710.1
(22) Date of filing: 07.08.2002
(51) Int. Cl.: B62M 27/00, B62M 27/02

(54) **Snowmobile**
Schneemobil
Motoneige

(30) Priority: 09.08.2001 JP 2001241550
(43) Date of publication of application: 12.02.2003
(73) Proprietor: Yamaha Hatsudoki Kabushiki Kaisha, Iwata-shi, Shizuoka-ken (JP)
(72) Inventor: Etou, Toyochika, c/o Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- US-A- 3 840 083
- US-A- 5 660 245
- US-A- 5 944 133

## Description

The present invention relates to a snowmobile according to the preamble part of claim 1, and particularly refers to a suspension member support structure for suspending ski boards of a snowmobile.

A snowmobile is provided with a pair of right and left ski boards. The ski boards are steered through a steering system connected to a steering handle. They are installed, through ski board holding members, to the ends of arm-like link members extending rightward and leftward from the central portion of a vehicle frame, respectively. The one end of each arm (link member) on the root side is pivotally supported on the vehicle frame side. Each of the right and left ski boards is also provided with a cylindrical shock absorber for absorbing vibration or the like generated due to irregularity on a running surface. The top end of the shock absorber is pivotably supported on the vehicle frame body and the bottom end of the shock absorber is mounted to the ski board. Thus, a ski board suspension member is constituted of the right and left arms, ski board holding members, shock absorbers and so on.

Conventionally, in a suspension member support structure of a snowmobile, support sections pivotally holding the right and left arms are structured by welding or riveting to connect a plurality of sheeted frame segments, extruded aluminum members or brackets and are assembled with the front part of the vehicle frame into one body. Also, the top end of each shock absorber is attached to the vehicle frame through a sheet frame segment or a bracket.

However, in such a conventional suspension member support structure of a snowmobile, there often occurs deformation or torsion and, therefore, for some snowmobiles, some sections of the vehicle frames by which the link members and the shock absorbers are pivotally supported have possibilities to be given poor stiffness.

Structural connections of a plurality of attachment members increases the number of parts as well as man-hours required for manufacturing.

Furthermore, the error in processing or machining accuracy as well as in assembly work possibly lowers the attachment accuracy in attaching the link members and the shock absorbers relative to the front section of the vehicle frame as well as the coupling accuracy in the connection of the link member to the shock absorber.

US 5,944,133 which constitutes the closest prior art discloses a snowmobile which is readable on the preamble part of claim 1. A snowmobile is disclosed with a frame including a rear frame subassembly and a front frame subassembly. The front frame subassembly comprises a bulkhead which is cast from aluminum or aluminum alloy. Two front skis are respectively supported by shock absorbers, suspension arms and trailing arms. Inner ends of the suspension arms are pivotably connected on the cast bulkhead by means of bosses formed in said bulkhead.

Besides the suspension arms which are pivotably supported on the bulkhead and which extend in a width direction of the snowmobile, the front skis are also supported by trailing arms which are affixed at the forward ends to tubular members holding the front skis. The rear ends of the trailing arms are pivotably connected to a rear portion of the front frame subassembly, which is a separate, non-cast element.

US 3,840,083 discloses a snowmobile chassis having a modular support which is a generally U-shaped casting. Integral arms for supporting the front skis are formed at the corners of the U-shaped casting. The front extremities of the integral arms have integral tubular bearing portions in order to receive posts of the front skis of the snowmobile.

It is an objective of the present invention to provide a snowmobile having a vehicle frame whose stiffness is improved and provided with increased accuracy in its assembly and attachment.

According to the present invention, said objective is solved by a snowmobile having the combination of features of independent claim 1.

According to this constitution, as the suspension member support is a casting having high stiffness and high strength, to which the linking means and the shock absorber are coupled, the linking means and the shock absorber are firmly secured to the casting. Furthermore, the attachment accuracy in attaching the linking means and the shock absorber to the vehicle frame and the coupling accuracy in the connection of the linking means to the shock absorber are improved. Accordingly, a robust vehicle frame having high stiffness can be obtained and the accuracy of each of the left and right suspension members as well as the accuracy in coupling the right and left suspension members each other, resulting in improved endurance and reliable function.

According to a preferred embodiment, there is provided a pair of arm-like linking means for respectively suspending the ski boards on right and left sides of a vehicle body, wherein on each of a right and left side of the suspension member support is arranged one arm-like linking means, and wherein a first end of each of the arm-like linking means is pivotally supported by the suspension member support and a respective second end of each of the arm-like linking means is adapted to be capable of oscillating.

Therein, it is preferable if each of the arm-like linking means is comprised a pair of upper and lower arm-like link members, wherein said pair of upper and lower link members respectively forms a parallel arm link for the respective ski board.

Moreover, there may be provided a pair of ski boards, each ski board being supported at one of said second ends of the respective arm-like linking means, wherein each ski board is supported by a cylindrical retainer attached to the arm-like linking means.

According to a further preferred embodiment, there is provided a pair of shock absorbers, each comprising a damping means and/or a spring member and being coupled at their bottom ends to the respective second ends of the respective arm-like link members or said cylindrical retainers.

According to another preferred embodiment, the suspension member support as a casting is formed by a casting process such as metallic dies, die casting processes or lost-wax processes.

According to still another preferred embodiment, the suspension member support additionally comprises a front section being formed continuously in the direction generally orthogonal to the right and left side sections, wherein at each of the right and left side sections the first end of the respective arm-like linking means and an upper end of the respective shock absorber are pivotally supported.

According to yet another preferred embodiment, the depression extends in the width direction of the vehicle body being disposed inside of each side section, wherein a shaft member is bridged between protrusion ends of front and rear faces of the depression and one end of one of the upper and lower arm-like link members is supported by the corresponding shaft member.

Therein, for each of the arm-like link members there may be provided one depression in the lower portion of the suspension member support inside of its right and left side sections, in which the arm-like upper and lower link members of the parallel arm link are mounted.

It is further beneficial if the suspension member support comprises a pair of left and right supports, said left and right supports being connected with each other, and respectively being fixed to the vehicle frame, wherein on the left support are pivotally supported one end of the linking means and the top end of one shock absorber, and on the right support are pivotally supported one end of the other linking means and the top end of the other shock absorber.

Additionally, a portion of the left support close to the position where the one end of the one linking means may be pivotally supported and the portion of the right support close to the position where the one end of the other linking means may be pivotally supported are connected together.

Moreover, the left and right supports may be connected by a cross member and steering link members coupled to the ski boards for steering the ski boards may be pivotally mounted on the cross member.

In the following, the present invention is explained in greater detail with respect to several embodiments thereof in conjunction with the accompanying drawings, wherein:
- Fig. 1: is an overall structural drawing of an embodiment of the snowmobile;
- Fig. 2: is a structural drawing of a vehicle frame of the snowmobile;
- Fig. 3: is an illustrative view in detail for the front section of the vehicle body in the vehicle body structure shown in Fig. 2;
- Fig. 4: is an illustrative view in detail for a suspension member support section shown in Fig. 2;
- Fig. 5: is a front view, showing a suspension member support;
- Fig. 6: is a top plan view, showing the suspension member support;
- Fig. 7: is a side elevational view, showing the suspension member support;
- Fig. 8: is a rear view, showing the suspension member support;
- Fig. 9: is an overall structural drawing of a steering system of the snowmobile shown in Fig. 2; and
- Fig. 10: is a perspective view of the substantial part of the steering system in Fig. 9.

Now, referring to the drawings, some embodiments of the present snowmobile are described hereinafter.

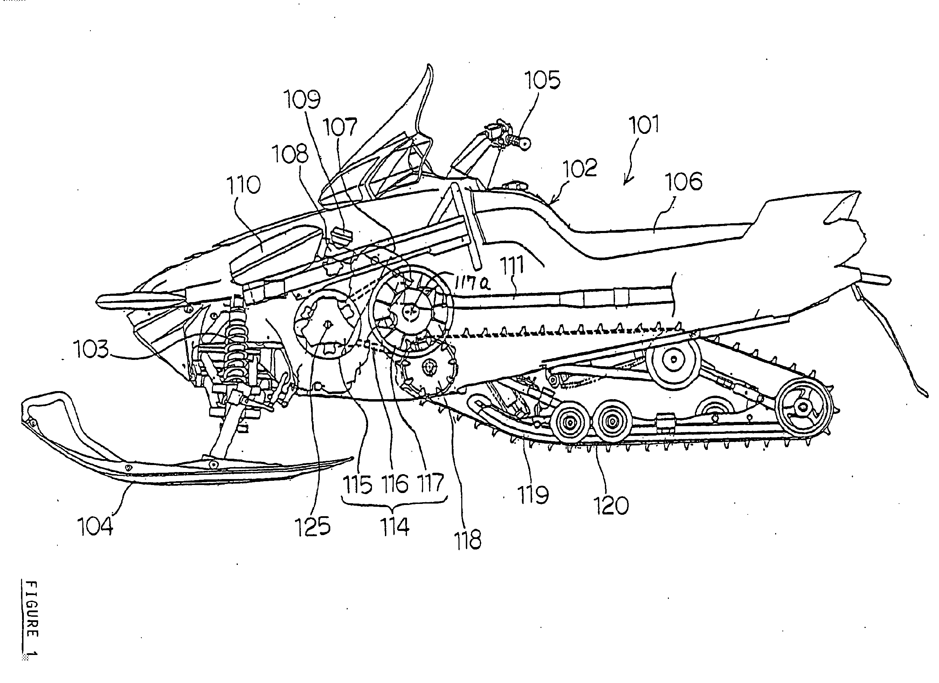

Fig. 1 is an overall side elevational view, showing an embodiment of the snowmobile.

A snowmobile 101 includes a vehicle body 102, the front section of which is provided with a left and a right front suspensions (shock absorbers) 103. To each of the left and right suspensions 103 is coupled a ski board 104 for steering operation. The ski boards 104 are connected to a steering handle 105 disposed on the central portion of the vehicle body through members (not shown), such as a steering shaft, arm pivot and link rod of a steering system. On the vehicle body 102 and behind the handle 105 is located a seat 106 for a rider.

An engine 107 is disposed within the front section of the vehicle body 102. In the embodiment, the engine 107 is a water-cooled, in-line four-cylinder engine. In the engine 107, a crankshaft (not shown) is oriented in the lateral direction (that is, in the direction normal to the drawing) of the vehicle body and each of the cylinders is oriented aslope downwardly. In the engine 107, a carburetor 109 is mounted on an intake pipe 108 and an intake silencer 110 is installed to the one end of the intake pipe 108. Behind the engine 107 is provided an exhaust pipe 111. An exhaust silencer (not shown) is connected to the end of the exhaust pipe 111 at the rear end of the vehicle body.

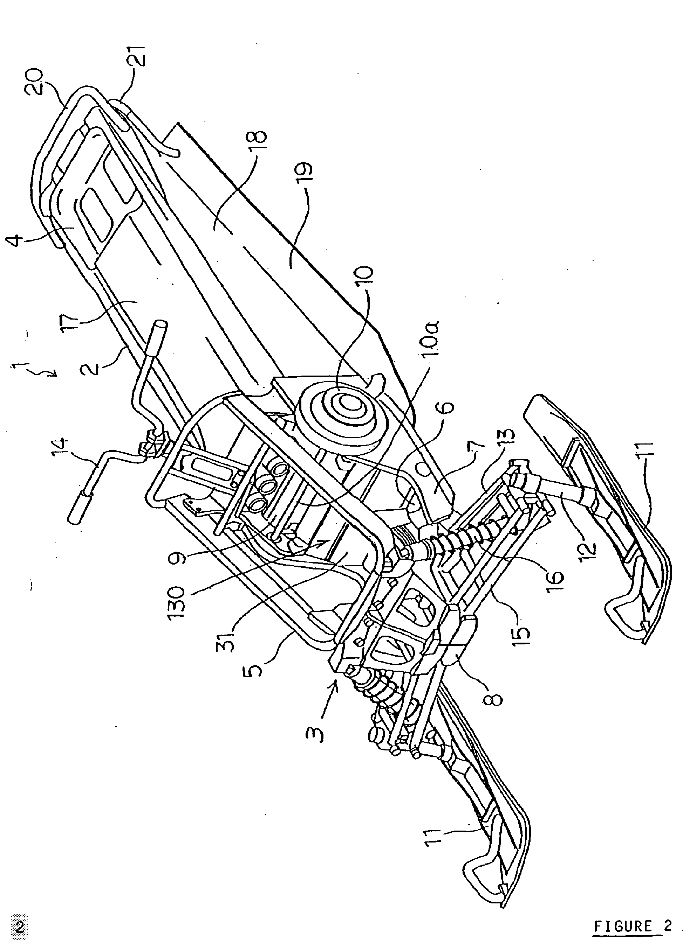

A power output shaft 125 is coupled to and in parallel with the crankshaft (not shown) of the engine 107. To the power output shaft 125 is connected a V-belt automatic transmission 114 that includes a drive pulley 115 mounted on the power output shaft 125 and a driven pulley (driven wheel) 117 connected to the drive pulley 115 through a V-belt 116. The driven pulley 117 is mounted to the end of the vehicle body, for example, on the right side thereof (refer to Fig. 2).

To the other end (on the right side of the vehicle body) opposite to the one end to which the driven pulley 117 is mounted, a drive wheel (not shown) is installed. The driven wheel is connected to the driven wheel 118 through a chain (not shown). A track belt 120 is engaged with the drive wheel 118. Accordingly, the rotational power is transmitted from the crankshaft of the engine 107 to the drive wheel 118 through the automatic transmission 114 and then the drive wheel 118 drives the endless track belt 120 installed on a slide rail 119 to cause the vehicle body 102 to run.

Fig. 2 shows an external appearance of the overall structure of a vehicle frame of a snowmobile according to the embodiment.

The vehicle body 1 of the snowmobile is composed of a main body frame 2 constituting the central vehicle body section (the section occupying approximately the overall body) and a front and a rear body frames 3, 4 disposed before and behind the main body frame 2.

The main body frame 2 is composed of a top body plate 17, side body plates 18 on both sides thereof, and footboards 19 integrally formed with the side body plates, respectively (actual footrest section is located on the front portion of the footboard). In a space on the lower surface side of the footboards is disposed a heat exchanger (not shown) that circulates coolant for the engine. To the front section of each left and right side body plates 18 is connected in a body a side plate 7 with bolts or rivets. A bottom plate 6 connects the left and right side plates 7. Those right and left side plates 7 and the bottom plate 6 also together with the side body plates 18 configure the main body frame 2.

The front body frame 3 is constituted of a suspension member support 8, for example, as a casting formed by die casting process. The suspension member support 8 is fixed to a U-frame 5 for reinforcement, the bottom plate 6 constituting the front section of the main body frame 2, and the right and left side plates 7.

A rear body frame 4 is formed, for example, as a casting by die casting process. Further, in the central portion of the vehicle body, a central frame 9 formed as a casting by die casting process is integrally connected to the main body frame 2 with bolts or rivets to constitute the vehicle frame.

An engine (not shown) is disposed within an engine compartment 130 formed between the right and left side plates 7 that constitute the front section of the main body frame 2. The engine is suspended at its front side by the suspension member support 8 as a casting constituting the front body frame 3, and suspended at its rear side by the central frame 9.

On the rear face side of the engine, a heat exchanger 31 is provided for circulating coolant for the engine. The heat exchanger is fixed between the left and right side plates 7 and configures, together with those side plates 7, part of the vehicle frame structure.

To the output shaft (not shown) of the engine is coupled a driven wheel 10 constituting a transmission mechanism (not shown), thereby to drive a drive belt (not shown). The driven wheel 10 is supported by the side plates 6 that constitute the front section of the main body frame. Reference numeral 10a denotes a driven shaft to which at its one end opposite to the driven wheel 10 is mounted a sprocket (not shown) that in turn drives to rotate a drive wheel (not shown) of a track.

On both sides of the suspension member support 8 are supported ski boards, respectively. A rotative steering shaft (not shown) passing through each cylindrical retainer 12 is secured to the ski board 11. Then a steering rod is connected to the steering shaft. The steering rod 13 is connected to a handle 14 located at the central portion of the vehicle body 1 through a steering system (not shown).

On each of the right and left sides of suspension member support 8 is pivotally mounted one end (on the root side) of a parallel link 15 composed of a pair of upper and lower arm-like members. The parallel arm link 15 is capable of oscillating at its other end on the root side (pivotal mount position) and is fixed to the cylindrical retainer for holding the ski board 11. To the upper portion on each of the right and left sides is pivotally mounted the top end of a shock absorber 16. The bottom end of the shock absorber 16 is mounted to the end of the parallel arm link 15 or to the cylindrical retainer 12 fixed thereto. The rear body frame 4 secured to the rear portion of the main body frame 2 is in the shape of a dish (or a box) having a top opening, in which a silencer (not shown) is housed. A grab bar 20 and a coolant pipe 21 are secured behind the rear body frame 4. The coolant pipe 21 is connected to a heat exchanger located below the footboards.

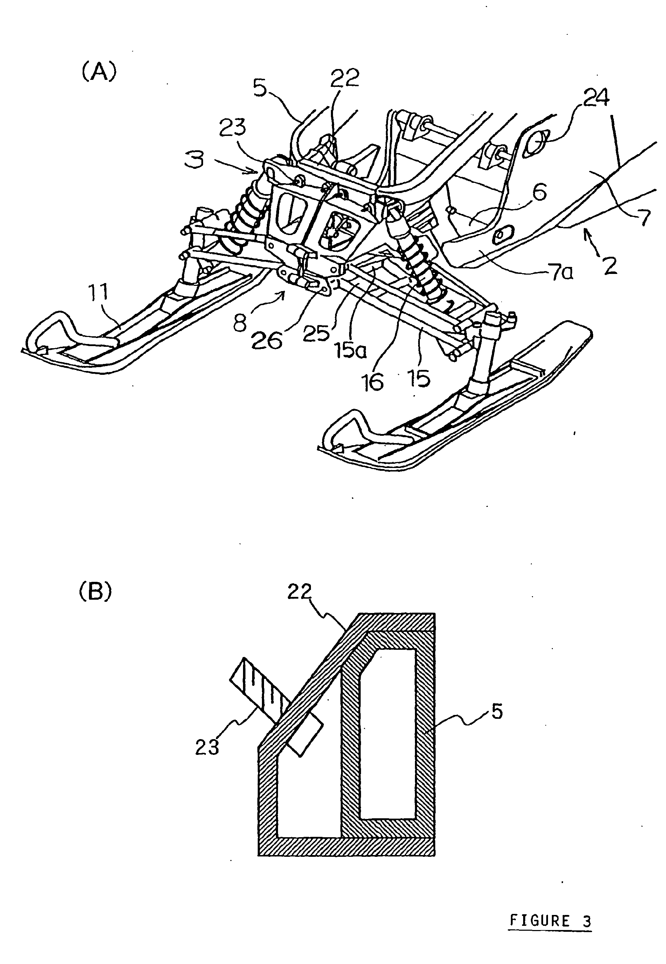

Fig. 3 is an illustrative view in detail for the front body frame 3.

A support frame 22 formed by sheet metal processing is secured to the front edge of the U-frame made of extruded aluminum material or the like, though riveting or welding. As shown in Fig. 3(B), a plurality of, for example four fastening bolts 23 are arranged on and along the support frame 22. The suspension member support 8 is fastened at its upper part by those fastening bolts 23 and nuts (not shown).

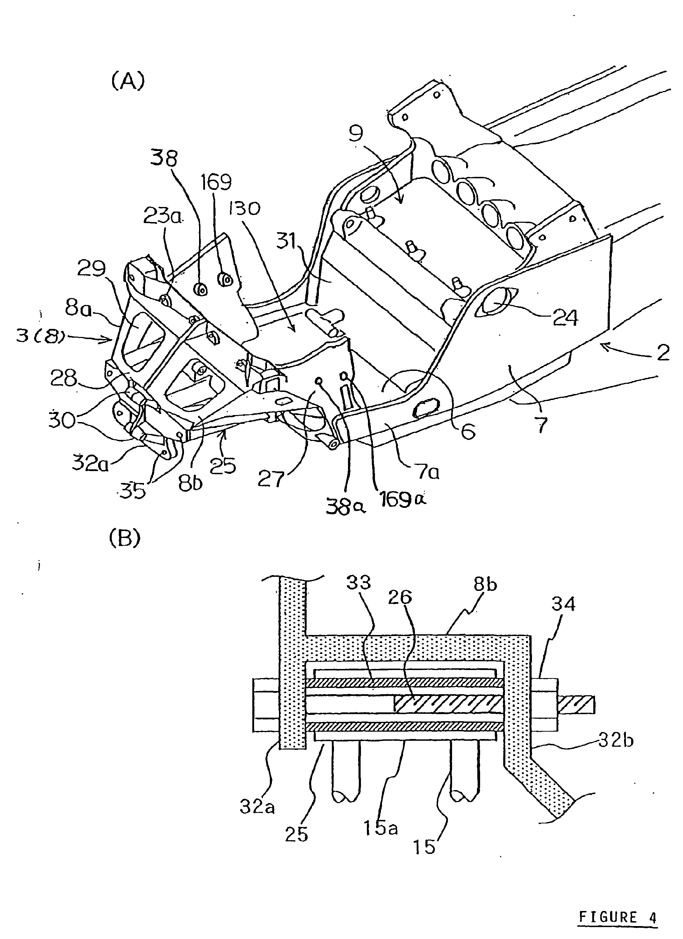

The suspension member support 8 is secured by a plurality of rivets (not shown)at its right and left sides, to front portions 7a that are integrally formed with the side plates 7 constituting the front section of the main body frame 2. Similarly, the suspension member support 8 is also secured by a plurality of rivets (not shown) at the lower part of its rear face to the bottom plate 6 constituting the front section of the main body frame 2. A shaft hole 24 for supporting the a shaft (not shown) of the driven wheel 10 (Fig. 2) is formed in each of the side plates 7. In the lower portion of the suspension member support 8 inside of its right and left side sections are formed depressions 25, respectively. In each of the right and left depressions 25 are provided with two bolting shafts 26, a lower bolting shaft and a upper bolting shaft, to which the root 15a of each upper and lower arms of the parallel link arm 15 is rotatively mounted (refer to Fig. 4(B)).

Fig. 4 is a perspective view, showing the front portion of main body frame in Fig. 2.

The suspension member support 8 is composed of two divisions, a right division and a left division that are cast into a right support 8a and left support 8b, respectively. Various casting processes may be used, such as ordinary casting process with the use of metallic die, die casting process and lost-wax process. Each of the right and left support 8a and 8b has a side section 27 and a front section 28 generally orthogonal each other. An opening 29 is formed in the front section 28 for the reduction of weight. Both supports 8a and 8b are firmly connected together at their front section by two bolts 30 and cross members (not shown) located inside of the supports. In the upper portion of each front section 28 are formed through-holes 23a for bolts to secure the support to the support frame 22 (Fig. 3).

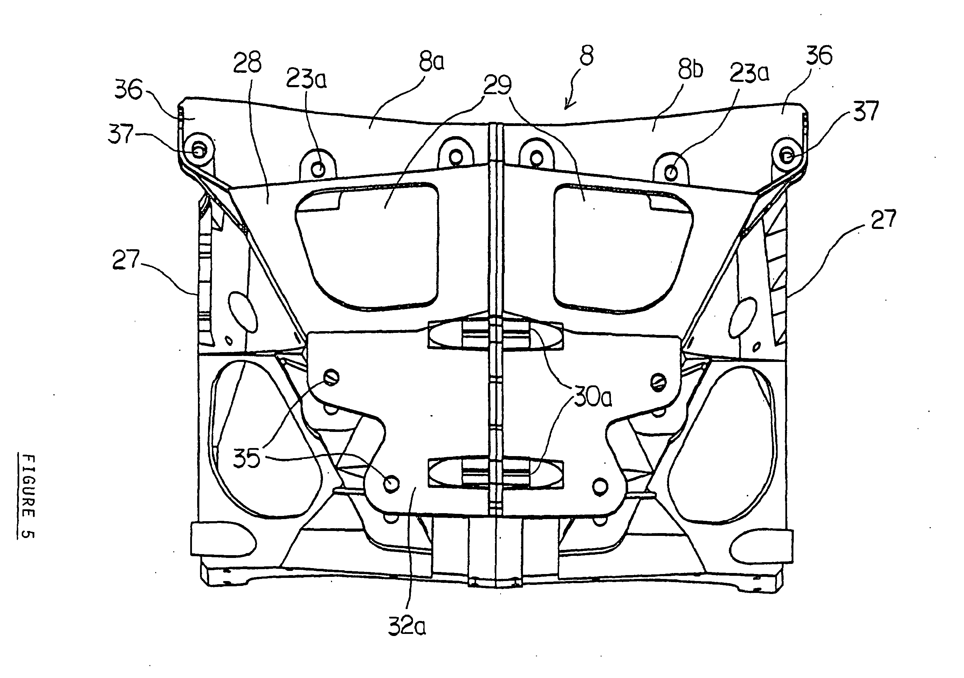

In the lower portion of the suspension member support 8 inside of its right and left side sections 28 are formed depressions 25, respectively, in which the parallel arm link 15 (Fig. 3) are mounted. By the provision of the depression 25 in each side section, protruding edges 32a and 32b are formed at the front and rear faces of the depression 25. As shown in Fig. 4(B), a bolting shaft 26 is bridged through a collar 33 between the front protruding edge 32a and the rear protruding edge 32b and fastened with a nut 34. The root 15a of the parallel link arm 15 is pivotally mounted around the collar 33. Each of the protruding edges 32a and 32b has bolt holes arranged such that the bolting shafts 26 can be secured at two positions, or high and low positions (refer to Figs. 4(A) and 5).

A boss 169 is formed at the inside of the each side section 27 to suspend the engine (not shown). The boss 169 is formed with a through-hole 169a through which an engine suspension bolt (not shown) passes. The reference numeral 38 denotes a boss for fastening a cross member having a through-hole 38a for a bolt, as described hereinafter.

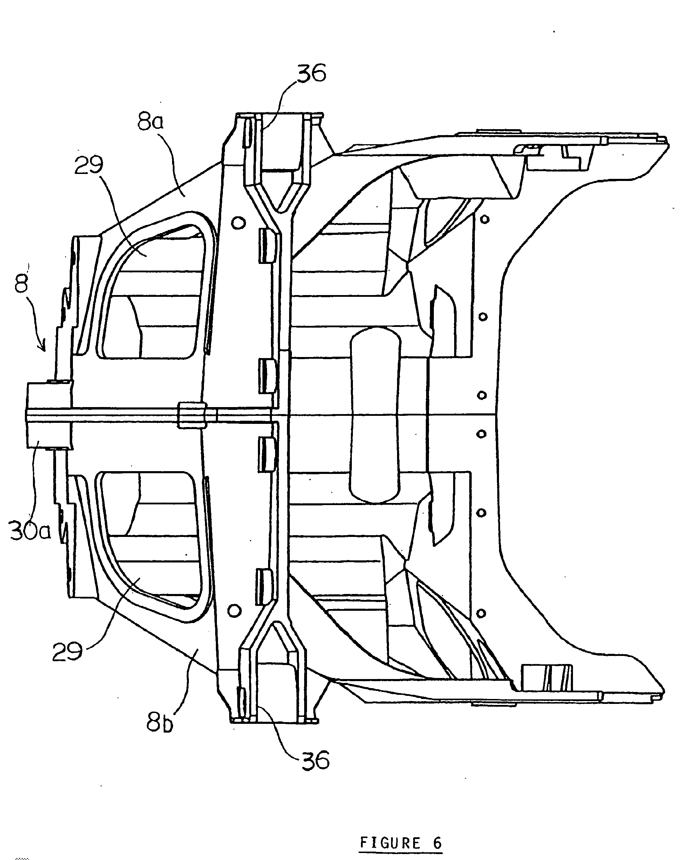

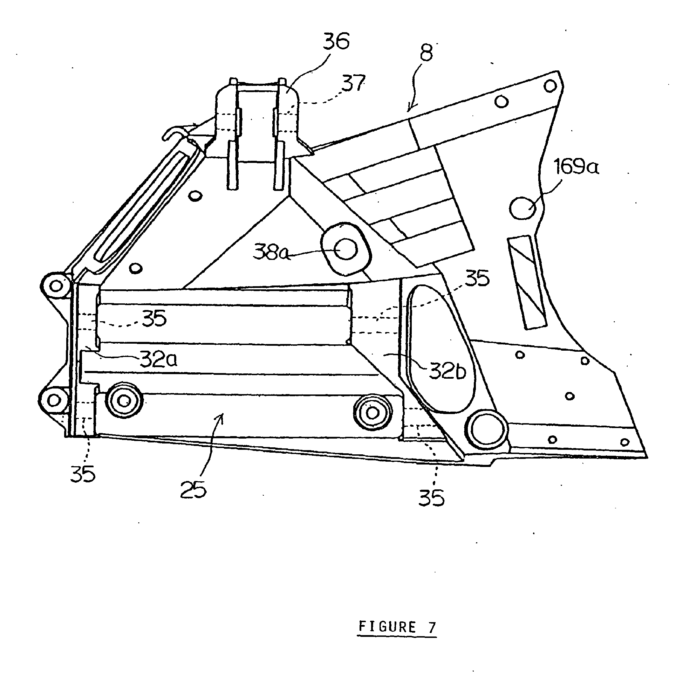

Figs. 5, 6 and 7 are the front view, top plan view and side elevational view of the suspension member support 8, respectively.

As shown in the drawings, in the front and rear protruding edges 32a, 32b are formed bolt holes 35 to allow the bolting shafts 26 (Fig. 4) to pass there through. Also, two pairs of connecting parts 30a, one pair is positioned higher and the other pair lower, are provided on the front protruding edges 32a at the mating surface between the right and left supports 8a and 8b. Those connecting parts 30a are located close to the positions where the corresponding bolt holes 35 are located on the upper and lower sides. A shock absorber supporting pivot 36 formed with a shaft hole 37 is provided on the upper portion of each of the supports 8a, 8b and supports the upper end of the shock absorber 16 (Figs. 2 and 3).

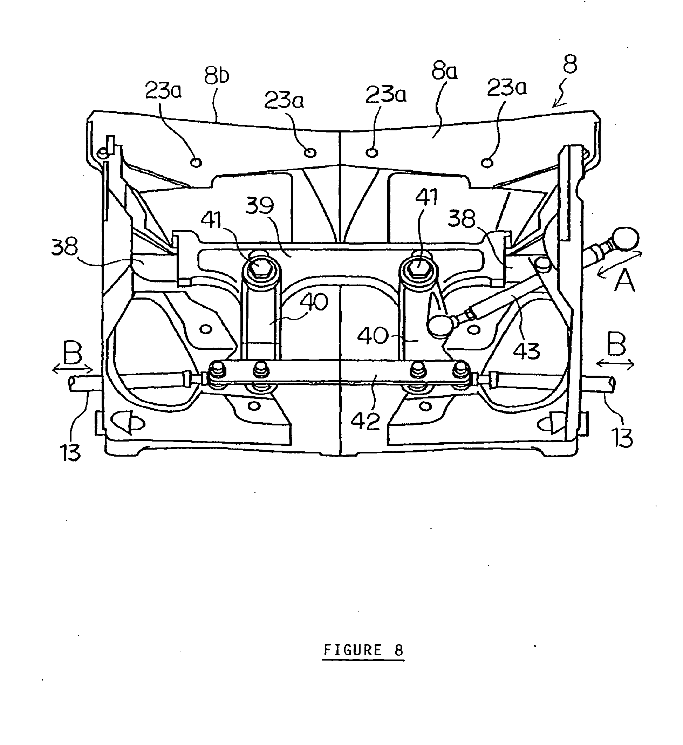

Fig. 8 is a view, showing the suspension member support 8, as seen from the rear side. Each of the right and left supports has a boss 38 formed therein. Between the right and left bosses 38 is bridged a cross member 39 for connecting the supports 8a and 8b. In the cross member 39, arm levers 40 corresponding to the right and left supports 8a and 8b are pivotally mounted about a bolting shaft 41 of the cross member 39. Both arm levers are connected to interlock each other. To one arm lever (right arm lever in this embodiment) 40 is connected to one end of the rod 43. The other end of the rod 43 is coupled to a steering shaft (not shown) to oscillate generally in axial direction, as shown by an arrow A. Both arm levers 40 are connected to right and left steering rods 43 through links 42, respectively. The steering rods 13 move as shown by an arrow B, corresponding to the movement in the direction of the arrow A of the rods 43. The steering rods 13 are connected to skis, respectively, to steer them, as previously described (Fig. 2).

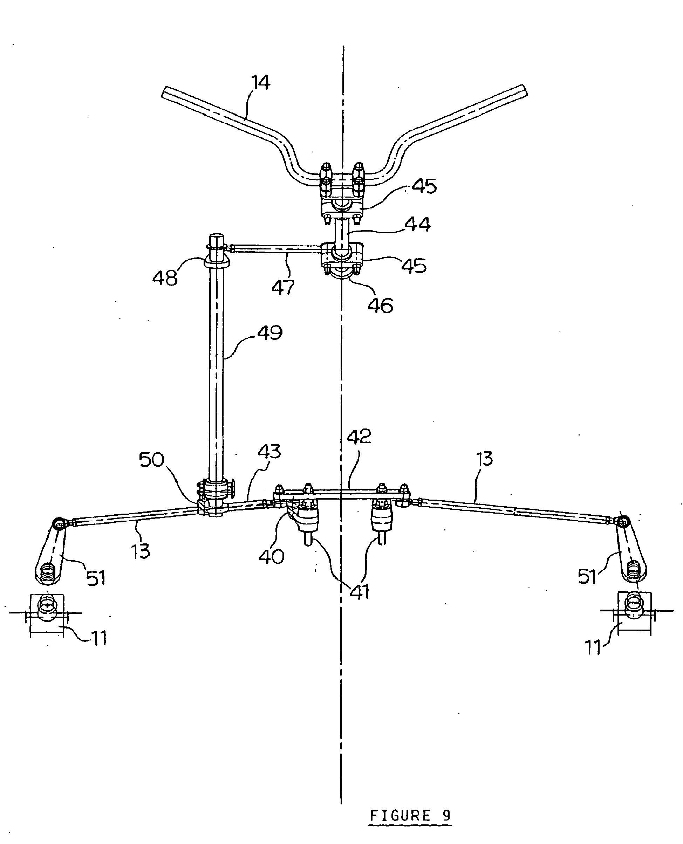

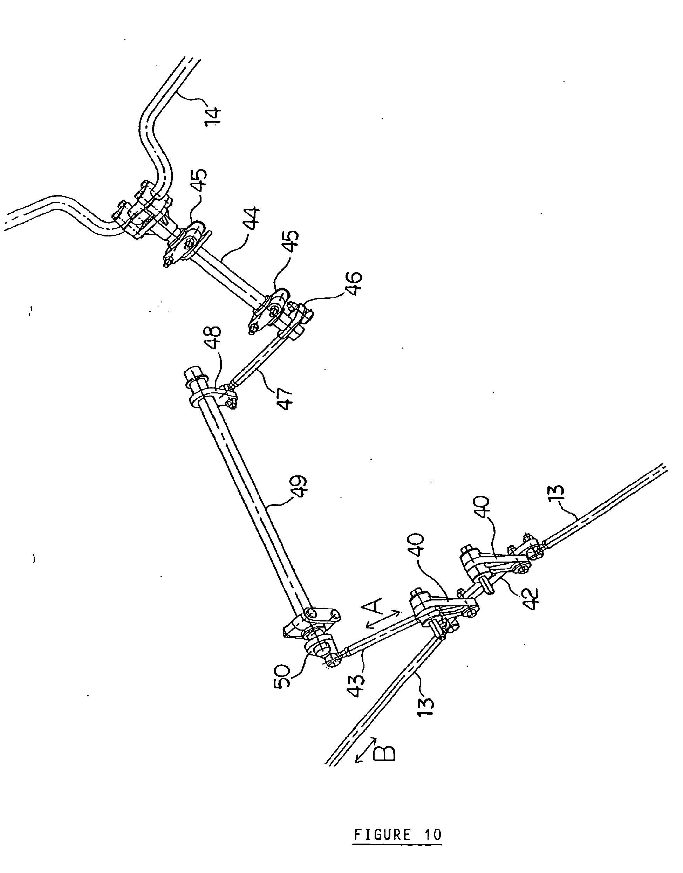

Fig. 9 is an overall structural drawing of a steering system of the snowmobile and Fig. 10 is a perspective view of the substantial part of the steering system.

A steering shaft 44 connected to the handle 14 is held on the upper and lower supports 45. To the bottom end of the steering shaft 44 is connected a rod 47 through an arm lever 46. One end of the rod 47 is connected to one end of a pivot shaft 49 through an arm lever 48. To the other end of the pivot shaft 49 is connected to one end of the rod 43 through an arm lever 50. The other end of the rod 43 is, as described in Fig. 8, connected to one of the two arm levers 40 interlocked each other through a link 42. Each of the steering rods 13 is connected to the corresponding arm lever 40. To the distal end of each steering rod 13 is connected a steering shaft (not shown) for the ski 11 through an arm lever 51.

In such a configuration of the steering system, the operation of the handle 14 allows the steering shaft 44 and the pivot shaft 49 to rotate, thereby to drive the rod 43, as shown by the arrow A and, in association with the movement of the rod 43 the operational rods 13 are driven as shown by the arrow B. As a result, the skis connected to the operational rods 43 are steered.

The description above refers to a suspension member support structure of a snowmobile, comprising a pair of arm-like link members for suspension located on the right and left sides of a vehicle body respectively are pivotally supported at their one ends by a suspension member support and the other end of each link member is capable of oscillating; a pair of skis are supported on the other ends of the respective link members; a pair of shock absorbers are couple at their bottom ends to the other ends of the respective link members; the suspension member support is a casting formed by casting process; and the casting is fixed to the vehicle frame

According to this constitution, as the suspension member support is a casting having high stiffness and high strength, to which the link members and the shock absorbers are coupled, the link members and the shock absorbers are firmly secured to the casting. Furthermore, the attachment accuracy in attaching the link members and the shock absorbers to the vehicle frame and the coupling accuracy in the connection of the link members to the shock absorbers are improved. Accordingly, a robust vehicle frame having high stiffness can be obtained and the accuracy of each of the left and right suspension members as well as the accuracy in coupling the right and left suspension members each other, resulting in improved endurance and reliable function.

The casting processes adapted for the suspension member supports include an ordinary casting process using metal dies, die casting process, and lost-wax process.

In a preferred example of the constitution, the suspension member support has right and left side sections and a front section formed continuously in the direction generally orthogonal to the right and left side sections, wherein on each of the right and left side sections is pivotally supported one end of the link member and the top end of the shock absorber.

According to this constitution, the suspension member support has a shape in which two faces (side sections and front section) extend in the directions orthogonal to each other, resulting in fully increased stiffness and strength.

In a further preferred example of the constitution, a depression extending in the width direction of the vehicle body is disposed inside of each side section; a shaft member is bridged between both the protrusion ends of the front and rear faces of each depression; and one end of each link member is mounted to the corresponding shaft member.

According to this constitution, in the depression formed inside the right and left side sections of the suspension member support as a casting is disposed the shaft member that pivotally supports the link members. Accordingly, the shaft member and the end of the link member pivotally mounted thereon are protected by the inner front and rear walls. Therefore, in this case, because each of the front face and rear face is formed as a protruding edge by forming a depression, those front and rear protruding edges securely ensure the stiffness and strength of the side sections of the suspension member support.

In a yet preferred example of the constitution, the suspension member support comprises a pair of left and right supports that are in turn securely connected each other, and is fixed to the vehicle frame; on the left support are pivotally supported one end of one link member and the top end of one shock absorber, and on the right support are pivotally supported one end of the other link member and the top end of the other shock absorber.

According to this constitution, the die structure and the casting process can be simplified as the suspension member support is a casting formed of two divisions, that is, right and left divisions. Although the suspension member support uses such a structure of two divisions, the attachment structure of the suspension member support to the vehicle frame remains to be simple. Also, because the link member and the shock absorber are attached to each of the right and left suspension member support divisions, the accuracy in attaching the link member and the shock absorber relative to the vehicle frame and the coupling accuracy in the connection of the link member to the shock absorber are improved.

In a yet further example of the constitution, the portion of the left support close to the position where the one end of the one link member is pivotally supported and the portion of the right support close to the position where the one end of the other link member is pivotally supported are securely connected together.

According to this constitution, if a load is applied to each of the right and left link members such that both members are separated each other (normally in the link members, such a load is always applied to their ends on the vehicle frame side from their other ends on the ski board side.), the moment acting on the fastening members such as a bolt, is reduced, reliability of connection is improved and the link members can be firmly supported by the suspension member support.

In a further yet example of the constitution, the left and right supports are connected by a cross member; and steering link members coupled to the ski boards for steering the ski boards are pivotally mounted on the cross member.

According to this constitution, the cross member for pivotally supporting the steering link members function as coupling members for coupling the left support and the right support. Accordingly, the coupling structure for coupling the left support and the right support can be correspondingly simplified.

As has been described above, with the present embodiment the link members and the shock absorbers can be rigidly supported by the suspension member support since the suspension member support is constituted of a casting having high stiffness and strength and additionally the link members (parallel arm linkage) and the shock absorbers are connected to the casting. Furthermore, the attachment accuracy in attaching the link members and the shock absorbers to the vehicle frame and the coupling accuracy in the connection of the link members to the shock absorbers are improved. Accordingly, a robust vehicle frame having high stiffness can be obtained and the accuracy of each of the left and right suspension members as well as the accuracy in coupling the right and left suspension members each other, resulting in improved endurance and reliable function.

Thus, briefly summarizing the above, there is provided a snowmobile having a vehicle frame whose stiffness is improved and provided with increased accuracy in its assembly and attachment, wherein arm-like link members 15 for suspension located on the right and left sides of a vehicle body are pivotally supported at their one ends by the suspension member support; the other end of each link member 15 is capable of oscillating; a ski 11 is supported on the other end of each link member 15; the bottom end of each shock absorber 16 is coupled to the other end of the link member 15; the suspension member support 8 is a casting formed by a casting process; and the casting is fixed on the vehicle frame 3.

## Claims

1. Snowmobile having ski boards (11), each ski board (11) being suspended by a shock absorber (16) and a linking means (15), said linking means (15) and shock absorber (16) being respectively coupled to a suspension member support (8), which is a casting member being attached to a vehicle frame (2) and which comprises right and left side sections (27),
**characterized in that**
a depression (25) is formed inside the right and left side sections (27) of the suspension member support (8), respectively,
the linking means (15) is mounted in the depression (25), and
each ski board (11) is completely supported by the cast suspension member support (8) via the shock absorber (16) and the linking means (15) coupled to the cast suspension member support (8).

2. Snowmobile according to claim 1, **characterized in that** the linking means comprises a pair of arm-like linking means (15) for respectively suspending the ski boards on right and left sides of a vehicle body (1), wherein on each of a right and left side of the suspension member support (8) is arranged one arm-like linking means (15), and wherein a first end of each of the arm-like linking means (15) is pivotally supported by the suspension member support (8) and a respective second end of each of the arm-like linking means (15) is adapted to be capable of oscillating.

3. Snowmobile according to claim 2, **characterized in that** each of the arm-like linking means (15) is comprised a pair of upper and lower arm-like link members, wherein said pair of upper and lower link members respectively forms a parallel arm link for the respective ski board (11).

4. Snowmobile according to claim 2 or 3, **characterized by** a pair of ski boards (11), each ski board being supported at one of said second ends of the respective arm-like linking means (15), wherein each ski board (11) is supported by a cylindrical retainer (12) attached to the arm-like linking means (15).

5. Snowmobile according to at least one of the preceding claims 2 to 4, **characterized by** a pair of shock absorbers (16), each comprising a damping means and/or a spring member and being coupled at their bottom ends to the respective second ends of the respective arm-like link members (15) or said cylindrical retainers (12).

6. Snowmobile according to at least one of the preceding claims 1 to 5, **characterized in that** the suspension member support (8) as a casting is formed by a casting process such as metallic dies, die casting processes or lost-wax processes.

7. Snowmobile according to at least one of the preceding claims 2 to 6, **characterized in that** the suspension member support (8) additionally comprises a front section (28) being formed continuously in the direction generally orthogonal to the right and left side sections (27), wherein at each of the right and left side sections (27) the first end of the respective arm-like linking means (15) and an upper end of the respective shock absorber (16) are pivotally supported.

8. Snowmobile according to at least one of the preceding claims 2 to 7, **characterized in that** the depression (25) extends in the width direction of the vehicle body (1), and a shaft member (26) is bridged between protrusion ends (32a,32b) of front and rear faces of the depression (25) and one end of one of the upper and lower arm-like link members (15) is supported by the corresponding shaft member (26).

9. Snowmobile according to claim 8, **characterized in that** for each of the arm-like link members (15) is provided one depression (25) in the lower portion of the suspension member support (8) inside of its right and left side sections (27), in which the arm-like upper and lower link members (15) of the parallel arm link are mounted.

10. Snowmobile according to at least one of the preceding claims 1 to 9, **characterized in that** the suspension member support (8) comprises a pair of left and right supports (8a,8b), said left and right supports being connected with each other, and respectively being fixed to the vehicle frame, wherein on the left support (8a) are pivotally supported one end of the linking means (15) and the top end of one shock absorber (16), and on the right support (8b) are pivotally supported one end of the other linking means (15) and the top end of the other shock absorber (16).

11. Snowmobile according to claim 10, **characterized in that** a portion of the left support (8a) close to the position where the one end of the one linking means (15) is pivotally supported and the portion of the right support (8b) close to the position where the one end of the other linking means (15) is pivotally supported are connected together.

12. Snowmobile according to claim 10 or 11, **characterized in that** the left and right supports (8a,8b) are connected by a cross member (39), and steering link members coupled to the ski boards (11) for steering the ski boards (11) are pivotally mounted on the cross member (39).

## Patentansprüche

1. Schneemobil mit Skibrettern (11), wobei jedes Skibrett (11) durch einen Stoßdämpfer (16) und ein Verbindungseinrichtung (15) aufgehängt ist, wobei die Verbindungseinrichtung (15) und der Stoßdämpfer (16) jeweils mit einer Aufhängungsteilabstützung (8) gekuppelt sind, die ein Gußteil ist, das mit einem Fahrzeugrahmen (2) verbunden ist und das rechte und linke Seitenabschnitte (27) aufweist,
**dadurch gekennzeichnet, dass**
jeweils eine Vertiefung (25) innerhalb des rechten und linken Seitenabschnittes (27) der Aufhängungsteilabstützung (8) gebildet ist,
die Verbindungseinrichtung (15) in der Vertiefung (25) montiert ist und
jedes Skibrett (11) durch die Aufhängungsteilabstützung (8) über den Stoßdämpfer (16) und die Verbindungseinrichtung (15) mit der Aufhängungsteilabstützung (8) gekuppelt ist.

2. Schneemobil nach Anspruch 1, **dadurch gekennzeichnet, dass** die Verbindungseinrichtung ein Paar von armartigen Verbindungseinrichtungen (15) zum jeweiligen Aufhängen der Skibretter auf der rechten und linken Seite einer Fahrzeugkarosserie (1) aufweist, wobei auf jeder einer rechten und linken Seite der Aufhängungsteilabstützung (8) eine armartige Verbindungseinrichtung (15) angeordnet ist und wobei ein erstes Ende von jeder der armartigen Verbindungseinrichtung (15) durch die Aufhängungsteilabstützung (8) schwenkbar gelagert ist und ein jeweiliges zweites Ende jeder der armartigen Verbindungseinrichtung (15) vorgesehen ist, sich hin- und hergehend zu bewegen.

3. Schneemobil nach Anspruch 2, **dadurch gekennzeichnet, dass** jede von der armartigen Verbindungseinrichtungen (15) ein Paar von oberen und unteren armartigen Verbindungsteilen aufweist, wobei das Paar der oberen und unteren armartigen Verbindungsteilen einen parallelen Verbindungsarm für das jeweilige Skibrett (11) bildet.

4. Schneemobil nach Anspruch 2 oder 3, **gekennzeichnet durch** ein Paar von Skibrettern (11), wobei jedes Skibrett an einem der zwei Enden der jeweiligen armartigen Verbindungseinrichtungen (15) gelagert ist, wobei jedes Skibrett (11) **durch** einen zylindrischen Halter (12), verbunden mit der armartigen Verbindungseinrichtung (15), gelagert ist.

5. Schneemobil nach zumindest einem der vorhergehenden Ansprüche 2 bis 4, **gekennzeichnet durch** ein Paar von Stoßdämpfern (16), jeder eine Dämpfungseinrichtung und / oder ein Federteil aufweisend und an ihren unteren Enden mit den jeweiligen zweiten Enden der armartigen Verbindungseinrichtung (15) oder der zylindrischen Haltern (12) verbunden.

6. Schneemobil nach zumindest einem der vorhergehenden Ansprüche 1 bis 5, **dadurch gekennzeichnet, dass** das Aufhängungsteilabstützung (8) als ein Gußteil durch ein Gießverfahren , wie z. B. mit Metallgießformen, Formgießverfahren oder Wachsausschmelzverfahren gebildet wird.

7. Schneemobil nach zumindest einem der vorhergehenden Ansprüche 2 bis 6, **dadurch gekennzeichnet, dass** die Aufhängungsteilabstützung (8) zusätzlich einen vorderen Abschnitt (28) aufweist, der fortlaufend in der Richtung im Wesentlichen rechtwinklig zu dem rechten und linken Seitenabschnitt (27) gebildet ist, wobei an jedem der rechten und linken Seitenabschnitte (27) das erste Ende der jeweiligen armartigen Verbindungseinrichtungen (15) und ein oberes Ende des jeweiligen Stoßdämpfers (16) schwenkbar gelagert sind.

8. Schneemobil nach zumindest einem der vorhergehenden Ansprüche 2 bis 7, **dadurch gekennzeichnet, dass** sich die Vertiefung (25) in der Richtung der Breite der Fahrzeugkarosserie (1) erstreckt und ein Wellenteil (26) zwischen den vorspringenden Enden (32a, 32b) von vorderen und hinteren Flächen der Vertiefung (25) überbrückend vorgesehen ist und ein Ende von einer der oberen oder hinteren armartigen Verbindungseinrichtungen (15) durch das entsprechende Wellenteil (26) gelagert wird.

9. Schneemobil nach Anspruch 8, **dadurch gekennzeichnet, dass** für jede der armartigen Verbindungseinrichtungen (15) eine Vertiefung (25) in dem unteren Abschnitt des Aufhängungsteillagers (8) innerhalb seines rechten und linken Seitenabschnittes (27) vorgesehen ist, in dem die oberen und unteren armartigen Verbindungseinrichtungen (15) des parallelen Verbindungsarmes montiert sind.

10. Schneemobil nach zumindest einem der vorhergehenden Ansprüche 1 bis 9, **dadurch gekennzeichnet, dass** die Aufhängungsteilabstützung (8) ein Paar von linken und rechten Lagerteilen (8a, 8b) aufweist, wobei das linke und rechte Lagerteil miteinander verbunden und jeweils an dem Fahrzeugrahmen befestigt sind, wobei an dem linken Abstützung (8a) ein Ende der Verbindungseinrichtungen (15) und das obere Ende eines Stoßdämpfers (16) schwenkbar gelagert sind, und an dem rechten Lagerteil (8b) ein Ende der anderen Verbindungseinrichtung (15) und das obere Ende des anderen Stoßdämpfers (16) schwenkbar gelagert sind.

11. Schneemobil nach Anspruch 10, **dadurch gekennzeichnet, dass** ein Abschnitt des linken Lagerteils (8a), das nahe zu der Position ist, wo das eine Ende der einen Verbindungseinrichtung (15) schwenkbar gelagert ist, und der Abschnitt des rechten Lagers (8b), der nahe zu der Position ist, wo das eine Ende der anderen Verbindungseinrichtung (15) schwenkbar gelagert ist, miteinander verbunden sind.

12. Schneemobil nach Anspruch 10 oder 11, **dadurch gekennzeichnet, dass** die linken und rechten Lagerteile (8a, 8b) durch ein Kreuzteil (39) verbunden sind und Lenkverbindungsteile, gekuppelt mit den Skibrettern (11) zum Lenken der Skibretter (11), an dem Kreuzteil (39) schwenkbar montiert sind.

## Revendications

1. Motoneige ayant des planches de ski (11), chaque planche de ski (11) étant suspendue par un amortisseur (16) et des moyens de tringlerie (15), lesdits moyens de tringlerie (15) et l'amortisseur (16) étant respectivement couplés à un support d'élément de suspension (8), qui est un élément moulé qui est fixé sur un châssis de véhicule (2) et qui comprend des sections latérales droite et gauche (27),
**caractérisé en ce que** :
un enfoncement (25) est formé à l'intérieur des sections latérales droite et gauche (27) du support d'élément de suspension (8) respectivement,
les moyens de tringlerie (15) sont montés dans l'enfoncement (25), et
chaque planche de ski (11) est complètement supportée par le support d'élément de suspension moulé (8) par l'intermédiaire de l'amortisseur (16) et les moyens de tringlerie (15) couplés au support d'élément de suspension moulé (8).

2. Motoneige selon la revendication 1, **caractérisée en ce que** les moyens de tringlerie comprennent une paire de moyens de tringlerie en forme de bras (15) pour suspendre respectivement les planches de ski sur les côtés droit et gauche d'une caisse de véhicule (1) dans laquelle, sur chacun d'un côté droit et gauche du support d'élément de suspension (8), on agence des moyens de tringlerie en forme de bras (15), et dans laquelle une première extrémité de chacun des moyens de tringlerie en forme de bras (15) est supportée de manière pivotante par le support d'élément de suspension (8) et une seconde extrémité respective de chacun des moyens de tringlerie en forme de bras (15) est adaptée pour pouvoir osciller.

3. Motoneige selon la revendication 2, **caractérisée en ce que** chacun des moyens de tringlerie en forme de bras (15) est composé d'une paire d'éléments de liaison en forme de bras supérieur et inférieur, dans laquelle ladite paire d'éléments de liaison supérieur et inférieur forment respectivement une liaison de bras parallèle pour la planche de ski (11) respective.

4. Motoneige selon la revendication 2 ou 3, **caractérisée par** une paire de planches de ski (11), chaque planche de ski étant supportée au niveau de l'une desdites secondes extrémités des moyens de tringlerie en forme de bras (15) respectifs, dans laquelle chaque planche de ski (11) est supportée par un dispositif de retenue cylindrique (12) fixé sur les moyens de tringlerie en forme de bras (15).

5. Motoneige selon l'une quelconque des revendications 2 à 4 précédentes, **caractérisée par** une paire d'amortisseurs (16), chacun comprenant des moyens d'amortissement et/ou un élément de ressort et qui est couplé au niveau de ses extrémités inférieures aux secondes extrémités respectives des éléments de liaison en forme de bras (15) respectifs ou desdits dispositifs de retenue cylindrique (12).

6. Motoneige selon au moins l'une des revendications 1 à 5 précédentes, **caractérisée en ce que** le support d'élément de suspension (8) sous la forme d'une pièce moulée, est formé par un procédé de moulage tel que des matrices métalliques, des procédés de moulage sous pression ou des procédés en cire perdue.

7. Motoneige selon au moins l'une des revendications 2 à 6 précédentes, **caractérisée en ce que** le support d'élément de suspension (8) comprend de plus une section avant (28) qui est formée de manière continue dans la direction généralement orthogonale aux sections latérales droite et gauche (27), dans laquelle, au niveau de chacune des sections latérales droite et gauche (27), la première extrémité des moyens de tringlerie en forme de bras (15) respectifs et une extrémité supérieure de l'amortisseur (16) respectif sont supportées de manière pivotante.

8. Motoneige selon au moins l'une des revendications 2 à 7 précédentes, **caractérisée en ce que** l'enfoncement (25) s'étend dans la sens de la largeur de la caisse de véhicule (1), et un élément d'arbre (26) fait le pont entre les extrémités de saillie (32a, 32b) des faces avant et arrière de l'enfoncement (25) et une extrémité de l'un des éléments de tringlerie en forme de bras supérieur et inférieur (15) est supportée par l'élément d'arbre (26) correspondant.

9. Motoneige selon la revendication 8, **caractérisée en ce que** pour chacun des éléments de liaison en forme de bras (15), on prévoit un enfoncement (25) dans la partie inférieure du support d'élément de suspension (8) à l'intérieur de ses sections latérales droite et gauche (27), dans laquelle les éléments de tringlerie supérieur et inférieur en forme de bras (15) de la liaison de bras parallèles sont montés.

10. Motoneige selon au moins l'une des revendications 1 à 9 précédentes, **caractérisée en ce que** le support d'élément de suspension (8) comprend une paire de supports gauche et droit (8a, 8b), lesdits supports gauche et droit étant raccordés entre eux, et étant fixés respectivement au châssis de véhicule, dans laquelle sur le support gauche (8a), on supporte de manière pivotante une extrémité des moyens de tringlerie (15) et l'extrémité supérieure d'un amortisseur (16), et sur le support droit (8b), on supporte de manière pivotante une extrémité des autres moyens de tringlerie (15) et l'extrémité supérieure de l'autre amortisseur (16).

11. Motoneige selon la revendication 10, **caractérisée en ce qu'**une partie du support gauche (8a) à proximité de la position dans laquelle une extrémité des moyens de tringlerie (15) est supportée de manière pivotante et la partie du support droit (8b) à proximité de la position dans laquelle une extrémité des autres moyens de tringlerie (15) est supportée de manière pivotante, sont raccordées ensemble.

12. Motoneige selon la revendication 10 ou 11, **caractérisée en ce que** les supports gauche et droit (8a, 8b) sont raccordés par une traverse (39), et des éléments de liaison de direction couplés aux planches de ski (11) pour diriger les planches de ski (11) sont montés de manière pivotante sur la traverse (39).
